# EUROPEAN PATENT APPLICATION

(11) **EP 3 015 299 A1**
(43) Date of publication of application: **04.05.2016**
(21) Application number: 15191398.5
(22) Date of filing: 26.10.2015
(51) Int. Cl.: B60J 5/06, E05D 15/10, E05D 15/06

(54) **VEHICLE DOOR STRUCTURE**

(30) Priority: 28.10.2014 JP 2014219420
(71) Applicant: KABUSHIKI KAISHA TOYOTA JIDOSHOKKI, Kariya-shi, Aichi 448-8671 (JP)
(72) Inventor: MARUYAMA, Katsuya, Kariya-shi, Aichi 448-8671 (JP); KUNO, Hiroshi, Kariya-shi, Aichi 448-8671 (JP)
(74) Representative: TBK

(57) **Abstract**

A vehicle door structure includes a sliding door configured to open and close a door opening formed in a side portion of a vehicle body, and a slide supporting mechanism configured to slide the sliding door. The slide supporting mechanism includes a middle slide rail disposed so as to extend in an opening-and-closing direction of the sliding door, and a guide body that is guided by the middle slide rail. The guide body includes two first rollers, two second rollers, a body portion, and an arm portion. The body portion rotatably supports the two first rollers and the two second rollers. The arm portion couples the sliding door and the body portion. The arm portion is disposed, on at least one of the sliding door and the body portion, to be turnable around a shaft parallel to rotary axes of the first rollers.

## Description

### BACKGROUND OF THE INVENTION

### Field of the Invention

The present invention relates to a vehicle door structure.

### Related Background Art

The structure described in JP 2013-227816 A has been known as a vehicle door structure in the related art. The vehicle door structure described in JP 2013-227816 A includes a sliding door for opening and closing an opening formed in a side portion of a vehicle body. The sliding door slides in a front-and-back direction of the vehicle body through a sliding mechanism. The sliding mechanism includes a slide rail and a roller unit (guide body). The slide rail is disposed so as to extend in an opening-and-closing direction of the sliding door. The slide rail guides the roller unit. The roller unit is fixed to the sliding door. The roller unit includes a first roller and two second rollers. The first roller regulates a movement in a height direction of the vehicle body in the slide rail. The second rollers regulate a movement in a direction parallel to a width direction of the vehicle body in the slide rail.

### SUMMARY OF THE INVENTION

In a vehicle door structure, a sliding door sometimes inclines relative to an opening-and-closing direction when the vehicle door structure is viewed from a side portion of a vehicle body. In this case, in a configuration including a guide body fixed to a sliding door like a sliding mechanism in the related art, when the sliding door inclines, the guide body also inclines together. Therefore, there is a risk that a member other than a first roller, such as a second roller, comes in contact with an upper surface or a lower surface of a slide rail. The second roller is a roller for regulating a movement in a direction parallel to a width direction of the vehicle body, namely, a roller that rotates around a shaft extending along a height direction of the vehicle body. Thus, when the second roller comes in contact with the upper surface of the slide rail, the second roller does not rotate. Therefore, contact of a member other than the first roller, such as the second roller, with the upper surface of the slide rail may cause problems including an increase in an operation load of the sliding door and abnormal noise generated when the sliding door is opened and closed.

An object of the present invention is to provide a vehicle door structure that can prevent generation of a defect due to contact between a slide rail and a roller of a guide body.

A vehicle door structure according to an embodiment of the present invention includes: a sliding door configured to open and close a door opening formed in a vehicle body; and a sliding mechanism configured to slide the sliding door. The sliding mechanism includes: a slide rail disposed so as to extend in an opening-and-closing direction of the sliding door; and a guide body that is guided by the slide rail. The guide body includes: at least two first rollers configured to regulate a movement in a height direction of the vehicle body in the slide rail and disposed so as to be spaced apart at a predetermined interval in an extending direction of the slide rail; at least two second rollers configured to regulate a movement in a direction parallel to rotary axes of the first rollers in the slide rail; a body portion configured to rotatably support the at least two first rollers and the at least two second rollers; and an arm portion coupling the sliding door and the body portion. The arm portion is disposed, on at least one of the sliding door and the body portion, to be turnable around a shaft parallel to the rotary axes.

In the vehicle door structure, the arm portion is disposed, on at least one of the sliding door and the body portion, to be turnable around the shaft parallel to the rotary axes of the first rollers. Accordingly, in this vehicle door structure, even when the sliding door inclines relative to the opening-and-closing direction, the arm portion turns around the shaft with respect to the sliding door and/or the body portion. Therefore, the body portion that supports each of the rollers is not interlocked with operation of the sliding door. As a result, the body portion is not affected by the inclination of the sliding door. In the guide body, the two or more first rollers are disposed so as to be spaced apart at the predetermined interval in the extending direction of the slide rail. Thus, even when the arm portion turns, an attitude of the body portion can be stably maintained. As a result, the vehicle door structure can prevent a defect caused by contact between the rollers of the guide body and the slide rail in the sliding mechanism.

In one embodiment, the arm portion may be disposed on the body portion to be turnable around the shaft. Accordingly, in the vehicle door structure, even when the sliding door inclines, the arm portion turns with respect to the body portion. Thus, the attitude of the body portion can be maintained. As a result, contact between an upper surface or a lower surface of the slide rail and a member other than the first roller, such as the second roller, can be prevented.

In one embodiment, the arm portion may be coupled to a position between the two first rollers in the body portion. As described above, coupling the arm portion to a position between the two first rollers can favorably maintain the attitude of the body portion.

In one embodiment, the arm portion may be coupled to the sliding door through a fixing member. The arm portion may be turnably disposed on the fixing member. Accordingly, in the vehicle door structure, even when the sliding door inclines, the arm portion turns with respect to the fixing member (sliding door). Thus, the attitude of the body portion can be maintained. As a result, the contact between the upper surface or the lower surface of the slide rail and the member other than the first roller, such as the second roller, can be prevented.

In one embodiment, the sliding door opens and closes a partial region of the door opening. The sliding door may include a swing door that opens and closes another partial region of the door opening together with the sliding door. The slide rail may be disposed on the swing door. In a configuration in which the sliding door moves along the slide rail disposed on the swing door, the swing door also sometimes inclines. As a result, the inclination of the sliding door with respect to the slide rail sometimes increases. Even in this case, since the arm portion turns in the vehicle door structure, the attitude of the body portion can be maintained. Therefore, the contact between the upper surface or the lower surface of the slide rail and the member other than the first roller, such as the second roller, can be prevented.

According to an embodiment of the present invention, generation of a defect due to contact between a slide rail and a roller of a guide body can be prevented.

### BRIEF DESCRIPTION OF THE DRAWINGS

FIG. 1 is a side view of a vehicle provided with a vehicle door structure according to an embodiment;
FIGS. 2A to 2C are perspective views in which a sliding door and a swing door shown in FIG. 1 are opened;
FIG. 3 is a view of the sliding door that inclines;
FIG. 4 is a view of a configuration of a guide body in the related art;
FIG. 5 is a view of the guide body in the related art when a sliding door inclines;
FIG. 6 is a perspective view of a configuration of a guide body according to the present embodiment;
FIG. 7 is a view of the configuration of the guide body;
FIG. 8 is a view of a cross-sectional configuration of a slide supporting mechanism;
FIG. 9 is a view of the guide body when a sliding door inclines;
FIG. 10 is a view of a guide body of a vehicle door structure according to another embodiment.

### DESCRIPTION OF THE PREFERRED EMBODIMENTS

A preferred embodiment of the present invention will be described in detail below with reference to the attached drawings. Note that the same or similar elements in the description of the drawings are denoted with the same reference signs, and the duplicate descriptions thereof are omitted. In the following description, a front-and-back direction, a width direction, and a height direction of a vehicle (automobile) 100 are defined as front-and-back, right-and-left, and up-and-down, respectively.

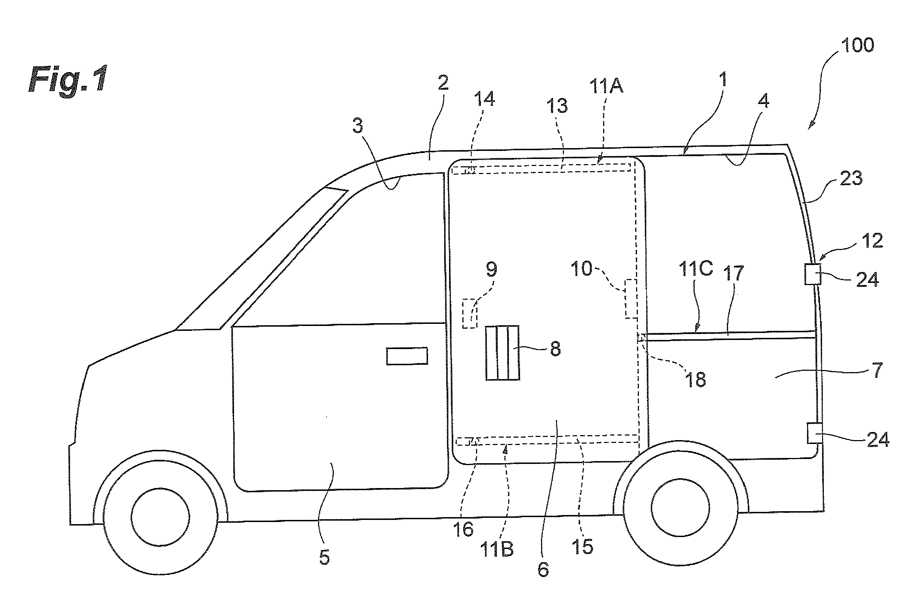

FIG. 1 is a side view of the vehicle including a vehicle door structure according to an embodiment. As shown in FIG. 1, the vehicle door structure 1 is disposed in the vehicle 100. In the present embodiment, the vehicle door structure 1 is disposed on a side portion of a vehicle body 2. A front door opening 3 and a rear door opening 4 are formed in the side portion of the vehicle body 2. The front door opening 3 is positioned on a side of a front seat. The rear door opening 4 is positioned on a side of a luggage room arranged behind the front seat. A front door 5 opens and closes the front door opening 3.

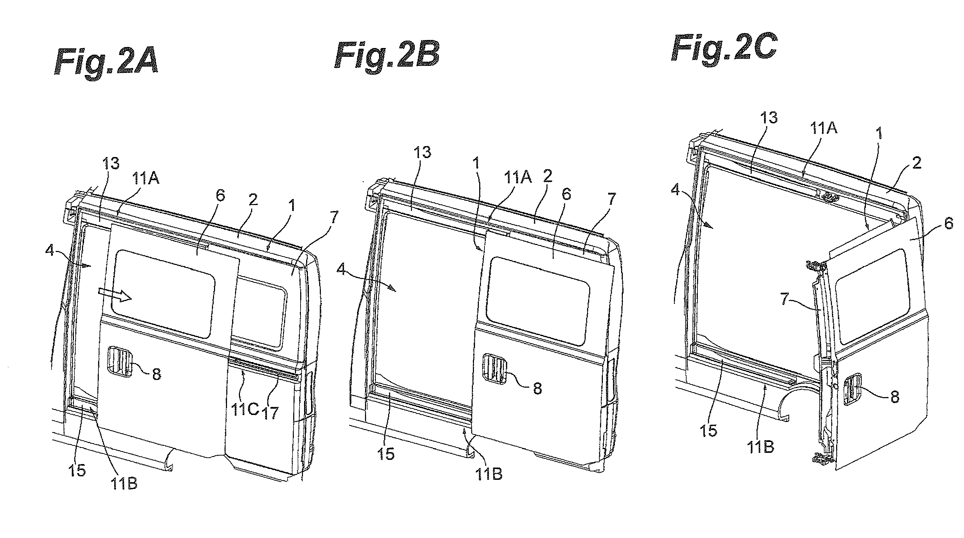

A sliding door 6 of a slide-openable type and a swing door 7 of a swing-openable type open and close the rear door opening 4. As shown in FIG. 2A, the sliding door 6 is configured to slide in a front-and-back direction of the vehicle body 2 and open and close a front region (partial region) of the rear door opening 4. As shown in FIG. 2B, when the sliding door 6 is fully opened, the sliding door 6 is positioned outside the swing door 7 so as to overlap the swing door 7.

As shown in FIG. 2C, the swing door 7 is configured to, when the sliding door 6 is fully opened, turn with respect to the vehicle body 2 and open and close a rear region (another partial region) of the rear door opening 4 together with the sliding door 6.

An outer door handle 8 for a sliding door, which is for opening and closing the sliding door 6, is disposed on an outer front portion of the sliding door 6. An inner door handle 9 for a sliding door, which is for opening and closing the sliding door 6, is disposed on an inner front portion of the sliding door 6. A handle 10 for a swing door, which is for opening and closing the swing door 7, is disposed on a front end portion of the swing door 7.

The vehicle door structure 1 includes slide supporting mechanisms (sliding mechanisms) 11A, 11B, and 11C, and a turn supporting mechanism 12. The slide supporting mechanism slidably supports the sliding door 6 in the front-and-back direction of the vehicle body 2. The turn supporting mechanism 12 turnably supports the swing door 7 with respect to the vehicle body 2.

The slide supporting mechanism 11A includes an upper slide rail 13 and a guide body 14. The upper slide rail 13 is disposed on an upper portion of the vehicle body 2 so as to extend in the front-and-back direction of the vehicle body 2. The guide body 14 is disposed on a front end of an upper portion of the sliding door 6. The upper slide rail 13 guides the guide body 14 when the sliding door 6 is opened and closed. The guide body 14 separates from the upper slide rail 13 and becomes movable in a width direction of the vehicle 100 when the sliding door 6 is fully opened. The slide supporting mechanism 11B includes a lower slide rail 15 and a guide body 16. The lower slide rail 15 is disposed on a lower portion of the vehicle body 2 so as to extend in the front-and-back direction of the vehicle body 2. The guide body 16 is disposed on a front end of a lower portion of the sliding door 6. The lower slide rail 15 guides the guide body 16 when the sliding door 6 is opened and closed. The guide body 16 separates from the lower slide rail 15 and becomes movable in the width direction of the vehicle 100 when the sliding door 6 is fully opened.

The slide supporting mechanism 11C includes a middle slide rail 17 and a guide body 18. The middle slide rail 17 is disposed near a center portion of the swing door 7 so as to extend in a front-and-back direction of the swing door 7. The guide body 18 is disposed on a rear end portion of the sliding door 6. The middle slide rail 17 guides the guide body 18 when the sliding door 6 is opened and closed. The front-and-back direction of the swing door 7 corresponds to a front-and-back direction of the sliding door 6 and the front-and-back direction of the vehicle body 2 when the swing door 7 is fully closed.

The turn supporting mechanism 12 includes a hinge 24. The hinge 24 turnably couples the swing door 7 to a rear pillar 23 disposed in a rear end portion of the vehicle body 2. For example, two hinges 24 are disposed so as to be spaced apart in an up-and-down direction of the vehicle body 2.

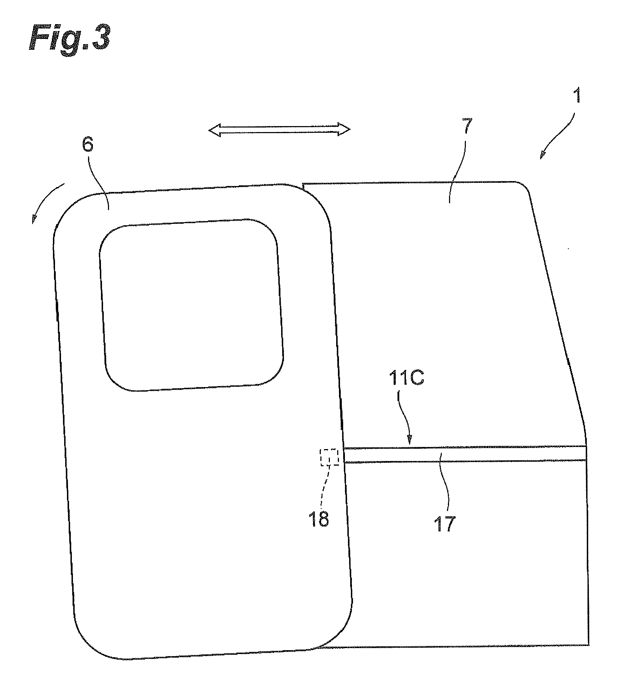

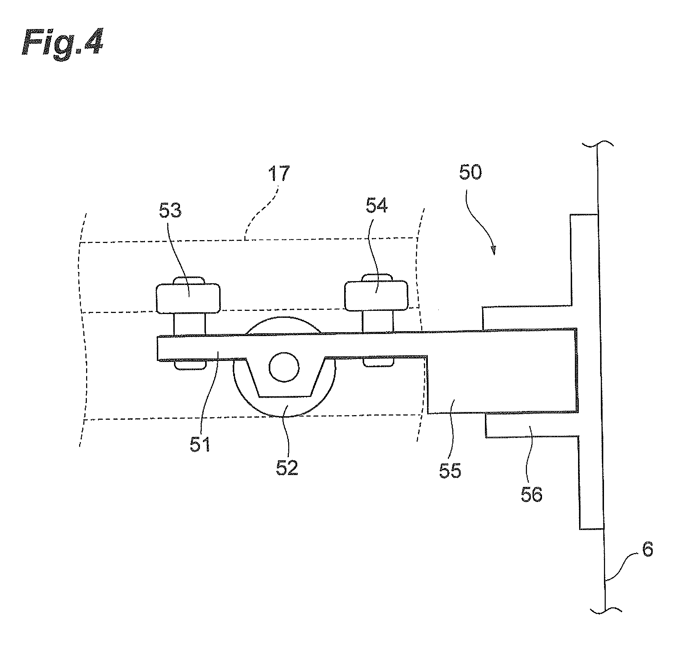

In the vehicle door structure 1 including the above structure, as shown in FIG. 3, the sliding door 6 sometimes inclines relative to an opening-and-closing direction (a direction shown by an arrow in the figure, an extending direction of the middle slide rail 17) of the sliding door 6 when the vehicle door structure 1 is viewed from the side portion of the vehicle body 2. In this case, the following defect may occur in a guide body in the related art. First, the guide body in the related art in which the defect may occur will be described. FIG. 4 is a view of the guide body in the related art. As shown in FIG. 4, the guide body 50 includes a body portion 51, a first roller 52, second rollers 53 and 54, an arm portion 55, and a base portion 56.

The body portion 51 rotatably supports the first roller 52 and the second rollers 53 and 54. The first roller 52 regulates a movement in a height direction of the vehicle body 2 in the middle slide rail 17. The first roller 52 rotates around a shaft that extends in a direction parallel to a rotary axis (in a width direction of the vehicle body 2) of the first roller 52. The second rollers 53 and 54 regulate a movement in the width direction of the vehicle body 2 in the middle slide rail 17. The second rollers 53 and 54 rotate around shafts that extend in the height direction of the vehicle body 2. The body portion 51 includes the two second rollers 53 and 54 disposed therein. More specifically, the second rollers 53 and 54 are positioned and spaced apart at a predetermined interval so as to interpose the first roller 52 therebetween.

The arm portion 55 and the body portion 51 are integrally formed. The arm portion 55 couples the body portion 51 and the base portion 56. The base portion 56 is fixed to the inner portion of the sliding door 6. The arm portion 55 is disposed on the base portion 56 to be turnable around a shaft that extends in the height direction of the vehicle body 2.

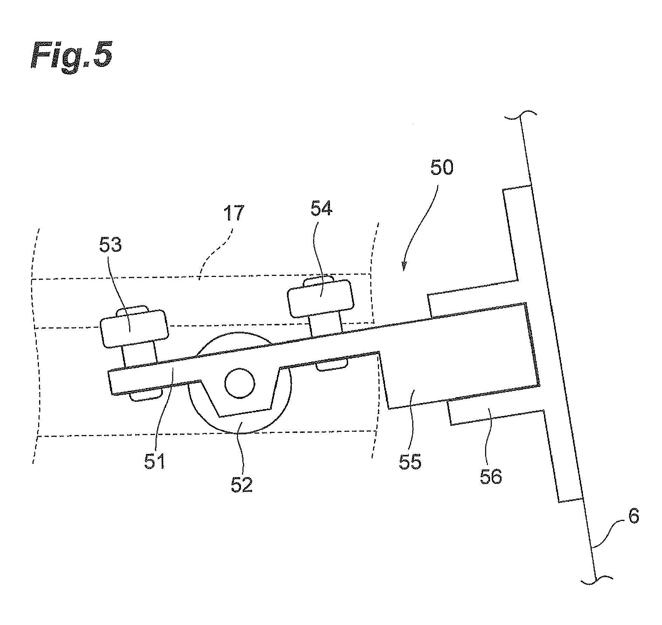

In the guide body 50 in the related art including the above configuration, when the sliding door 6 inclines as shown in FIG. 3, the body portion 51 of the guide body 50 also inclines together with the sliding door 6 as shown in FIG. 5. In this case, there is a risk that the second roller 54 in the guide body 50 comes in contact with an upper surface of the middle slide rail 17. When the second roller 54 comes in contact with the middle slide rail 17, a problem may occur, such as an increase in an operation load of the sliding door 6 and abnormal noise generated when the sliding door 6 is opened and closed.

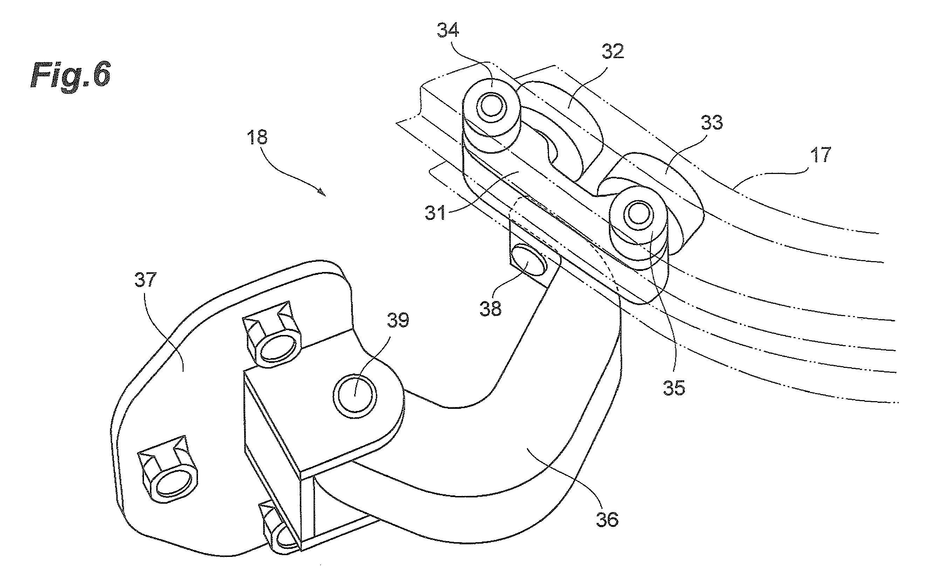

In order to solve the above problem, as shown in FIGS. 6 to 8, the guide body 18 of the slide supporting mechanism 11C according to the present embodiment includes a body portion 31, first rollers 32 and 33, second rollers 34 and 35, an arm portion 36, and a base portion 37 (fixing member).

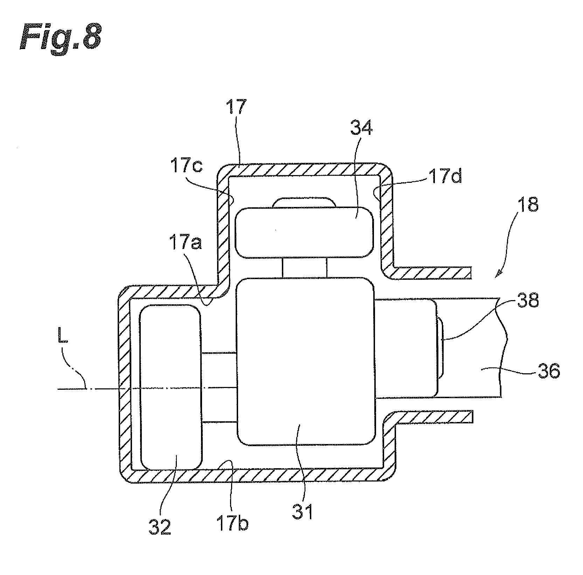

The body portion 31 rotatably supports the first rollers 32 and 33 and the second rollers 34 and 35. The first rollers 32 and 33 regulate a movement in the height direction of the vehicle body 2 in the middle slide rail 17. More specifically, as shown in FIG. 8, the first rollers 32 and 33 come in contact with an upper surface 17a and a lower surface 17b of the middle slide rail 17 so as to regulate the movement in the height direction of the vehicle body 2. The body portion 31 includes the two first rollers 32 and 33 disposed therein. More specifically, the first rollers 32 and 33 are disposed and spaced apart at a predetermined interval in the extending direction of the middle slide rail 17 at both end portions of the body portion 31. The second rollers 34 and 35 regulate a movement in a direction parallel to rotary axes L (the width direction of the vehicle body 2 in the present embodiment) of the first rollers 32 and 33 in the middle slide rail 17. More specifically, as shown in FIG. 8, the second rollers 34 and 35 come in contact with a side surface 17c and another side surface 17d of the middle slide rail 17 so as to regulate a movement in the width direction of the vehicle body 2. The body portion 31 includes the two second rollers 34 and 35 disposed therein. More specifically, the second rollers 34 and 35 are disposed and spaced apart at a predetermined interval at both end portions of the body portion 31.

The arm portion 36 couples the body portion 31 and the base portion 37. An end portion of the arm portion 36 is turnably disposed on the body portion 31. More specifically, the arm portion 36 is disposed on the body portion 31 to be turnable around a shaft 38 that extends in the direction parallel to the rotary axes L of the first rollers 32 and 33. The base portion 37 is fixed to the inner side of the sliding door 6. The arm portion 36 is disposed on the base portion 37 to be turnable around a shaft 39 that extends in the height direction of the vehicle body 2.

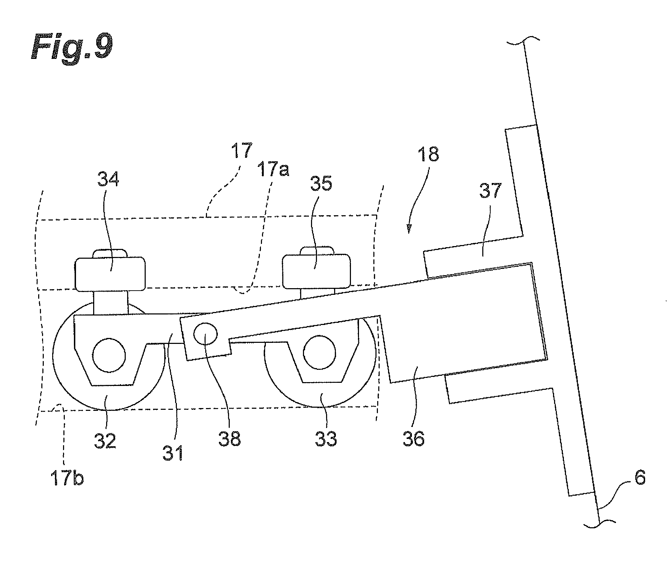

In the guide body 18 including the above configuration, when the sliding door 6 inclines as shown in FIG. 3, the arm portion 36 inclines together with the sliding door 6 as shown in FIG. 9. In this case, the arm portion 36 turns around the shaft 38 with respect to the body portion 31. Therefore, the body portion 31 is not affected by behavior of the arm portion 36. As a result, the first rollers 32 and 33 remain in contact with the lower surface of the middle slide rail 17, and the body portion 31 remains in an attitude (horizontal).

As described above, in the vehicle door structure 1 according to the present embodiment, the arm portion 36 is disposed on the body portion 31 to be turnable around the shaft 38 parallel to the rotary axes L of the first rollers 32 and 33. Accordingly, in the vehicle door structure 1, even when the sliding door 6 inclines relative to the opening-and-closing direction of the sliding door 6, the arm portion 36 turns around the shaft 38 with respect to the body portion 31. Therefore, the body portion 31 that supports the first rollers 32 and 33 and the second rollers 34 and 35 is not interlocked with operation of the sliding door 6 and not affected by the inclination of the sliding door 6. In the guide body 18, the two first rollers 32 and 33 are disposed and spaced apart at the predetermined interval in the extending direction of the middle slide rail 17. Therefore, even when the arm portion 36 turns, an attitude of the body portion 31 can be stably maintained. As a result, the vehicle door structure 1 can prevent generation of a defect due to contact between the middle slide rail 17 and the second roller 34 of the guide body 18.

In the present embodiment, the arm portion 36 is coupled to a position between the two first rollers 32 and 33 in the body portion 31. The arm portion 36 is coupled to the position between the two first rollers 32 and 33 so that the attitude of the body portion 31 can be favorably maintained.

The present invention is not limited to the above embodiment. For example, in the above embodiment, an exemplary configuration including the sliding door 6 and the swing door 7 has been described. However, a configuration including the sliding door 6 without the swing door 7 may be used in the vehicle door structure. In the above embodiment, an exemplary configuration including the sliding door 6 and the swing door 7 disposed on the side portion of the vehicle body 2 has been described. However, the sliding door 6 and the swing door 7 may be disposed on a rear portion of the vehicle body 2. Alternatively, the sliding door 6 may be disposed on the rear portion of the vehicle body 2 without the swing door 7.

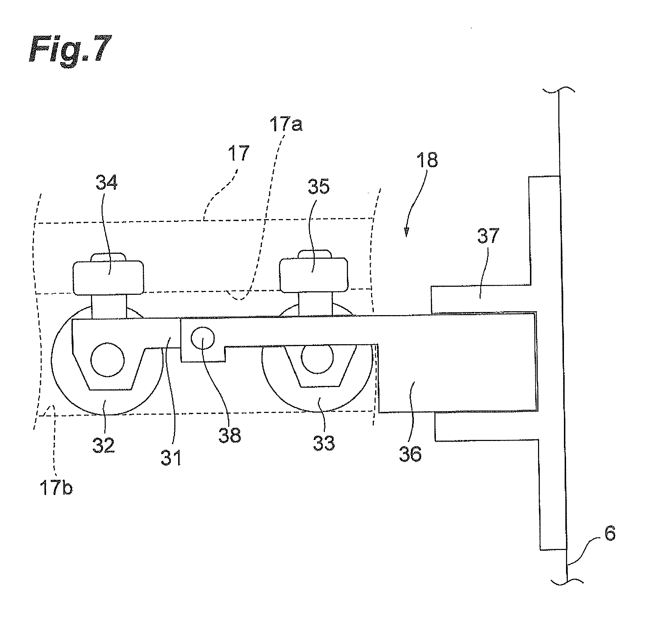

In the above embodiment, an example of the guide body 18 of the slide supporting mechanism 11C, including the configurations shown in FIGS. 7 and 9, has been described. However, the guide body 14 of the slide supporting mechanism 11A and/or the guide body 16 of the slide supporting mechanism 11B may include a similar configuration to that of the guide body 18.

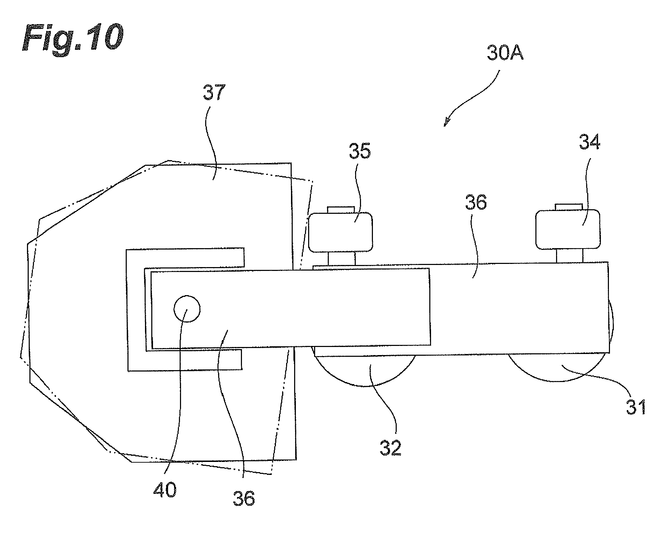

In the above embodiment, an exemplary configuration in which the arm portion 36 of the guide body 18 is disposed on the body portion 31 to be turnable around the shaft 38 parallel to the rotary axes L of the first rollers 32 and 33, has been described. However, the guide body 18 may be disposed on the sliding door 6 to be turnable around a shaft parallel to the rotary axes L of the first rollers 32 and 33. FIG. 10 is a view of a guide body of a vehicle door structure according to another embodiment.

As shown in FIG. 10, an arm portion 36 in a guide body 30A may be disposed, on a base portion 37 fixed to the sliding door 6, to be turnable around a shaft parallel to rotary axes L of first rollers 32 and 33. More specifically, the arm portion 36 is disposed on the base portion 37 to be turnable around a shaft 40. With this configuration, even when the sliding door 6 inclines relative to the opening-and-closing direction of the sliding door 6, the arm portion 36 turns around the shaft 40 with respect to the base portion 37 (sliding door 6). Therefore, a body portion 31 that supports the first rollers 32 and 33 and second rollers 34 and 35 is not interlocked with the operation of the sliding door 6 and not affected by the inclination of the sliding door 6. As a result, contact between the middle slide rail 17 and the guide body 30A in a sliding mechanism can be prevented. In addition, this configuration is effective for supporting a load of the sliding door 6.

In the above embodiment, an exemplary configuration in which the two first rollers 32 and 33 and the two second rollers 34 and 35 are disposed has been described. However, the numbers of the first rollers and the second rollers may be appropriately determined as long as at least two each of them are disposed.

A vehicle door structure includes a sliding door configured to open and close a door opening formed in a side portion of a vehicle body, and a slide supporting mechanism configured to slide the sliding door. The slide supporting mechanism includes a middle slide rail disposed so as to extend in an opening-and-closing direction of the sliding door, and a guide body that is guided by the middle slide rail. The guide body includes two first rollers, two second rollers, a body portion, and an arm portion. The body portion rotatably supports the two first rollers and the two second rollers. The arm portion couples the sliding door and the body portion. The arm portion is disposed, on at least one of the sliding door and the body portion, to be turnable around a shaft parallel to rotary axes of the first rollers.

## Claims

1. A vehicle door structure comprising:
a sliding door configured to open and close a door opening formed in a vehicle body; and
a sliding mechanism configured to slide the sliding door,
wherein the sliding mechanism includes:
a slide rail disposed so as to extend in an opening-and-closing direction of the sliding door; and
a guide body that is guided by the slide rail,
the guide body includes:
at least two first rollers configured to regulate a movement in a height direction of the vehicle body in the slide rail and disposed so as to be spaced apart at a predetermined interval in an extending direction of the slide rail;
at least two second rollers configured to regulate a movement in a direction parallel to rotary axes of the first rollers in the slide rail;
a body portion configured to rotatably support the at least two first rollers and the at least two second rollers; and
an arm portion coupling the sliding door and the body portion, and
the arm portion is disposed, on at least one of the sliding door and the body portion, to be turnable around a shaft parallel to the rotary axes.

2. The vehicle door structure according to claim 1, wherein the arm portion is disposed on the body portion to be turnable around the shaft.

3. The vehicle door structure according to claim 2, wherein the arm portion is coupled to a position between the two first rollers in the body portion.

4. The vehicle door structure according to claim 1, wherein the arm portion is coupled to the sliding door through a fixing member, and is disposed on the fixing member to be turnable around the shaft.

5. The vehicle door structure according to any one of Claims 1 to 4, wherein the sliding door opens and closes a partial region of the door opening,
the vehicle door structure includes a swing door configured to open and close another region of the door opening together with the sliding door, and
the slide rail is disposed on the swing door.
